# EUROPÄISCHE PATENTSCHRIFT

(11) **EP 3 148 826 B1**
(45) Veröffentlichungstag und Bekanntmachung des Hinweises auf die Patenterteilung: **15.08.2018**
(21) Anmeldenummer: 15722554.1
(22) Anmeldetag: 19.05.2015
(51) Int. Cl.: B60J 7/02, B60J 7/043

(54) **ANORDNUNG MIT EINEM DECKEL FÜR EIN FAHRZEUGDACH**
ARRANGEMENT COMPRISING A COVER FOR A VEHICLE ROOF
DISPOSITIF POURVU D'UN COUVERCLE POUR TOIT DE VÉHICULE

(30) Priorität: 30.05.2014 DE 102014107662
(43) Veröffentlichungstag der Anmeldung: 05.04.2017
(73) Patentinhaber: Webasto SE, 82131 Stockdorf (DE)
(72) Erfinder: WINGEN, Bernhard, 82131 Stockdorf (DE)
(74) Vertreter: Epping - Hermann - Fischer
(86) Internationale Anmeldenummer: PCT/EP2015/060999
(87) Internationale Veröffentlichungsnummer: WO 2015/181000

(56) Entgegenhaltungen:
- WO-A1-2007/079747
- DE-A1-102007 003 354
- US-A1- 2013 307 296

## Beschreibung

Die Erfindung betrifft eine Anordnung mit einem Deckel für ein Fahrzeugdach. Der Deckel ist ausgehend von einer Schließstellung zum Verschließen einer Dachöffnung zum Öffnen durch Ausstellmittel in seinem hinteren Bereich anhebbar.

Typischerweise wird beim Öffnungsvorgang der Dachöffnung ein Antriebsschlitten in Fahrzeuglängsrichtung verschoben. Dabei wird zunächst eine einem Fahrzeugheck zugewandte Hinterkante des Deckels angehoben, sodass der Deckel schräg gestellt ist. Diese Stellung wird auch als Lüfterstellung bezeichnet. Herkömmlich senkt sich dabei eine Vorderkante des Deckels ab, da sich der Deckel um eine vordere Lagerstelle eines vorderen Ausstellhebels dreht. Dabei steht der Ausstellhebel bei der Bewegung des Deckels aus der Schließstellung in die Lüfterstellung bezüglich einer Fahrzeuglängsrichtung still. Das Absenken der Deckelvorderkante nach unten kann beispielsweise bis zu 6 mm oder mehr betragen.

Aus der WO 2007/079747 A1 ist ein Fahrzeugdach bekannt, mit einem anhebbaren und oberhalb eines festen Dachabschnitts verschiebbaren Deckelelement zum wahlweisen Schließen oder zumindest teilweise Freigeben einer Dachöffnung.

Aus der US 2013/307296 A1 ist eine Dachanordnung für ein Fahrzeug mit einem bewegbaren Deckel bekannt.

Aus der DE 10 2007 003 354 A1 ist ein Fahrzeugdach mit einem öffnungsfähigen Dachteil zum wenigstens teilweisen Freigeben einer Dachöffnung im Fahrzeugdach bekannt.

Eine Aufgabe, die der Erfindung zugrunde liegt, ist es, eine Anordnung mit einem Deckel für ein Fahrzeugdach zu beschreiben, welche sich durch einen präzisen Betrieb auszeichnet.

Erfindungsgemäß wird eine Anordnung mit einem Deckel für ein Fahrzeugdach beschrieben, der ausgehend von einer Schließstellung zum Verschließen einer Dachöffnung zum Öffnen durch Ausstellmittel in seinem hinteren Bereich anhebbar ist. Der Deckel weist eine Vorderkante und eine der Vorderkante gegenüberliegenden Hinterkante auf. Die Ausstellmittel weisen einen in Fahrzeuglängsrichtung in einer Führungsschiene verschiebbaren Schlitten auf. Weiter weisen die Ausstellmittel einen Ausstellhebel mit einem vorderen Endbereich, einem hinteren Endbereich und einem zwischen dem vorderen Endbereich und hinteren Endbereich angeordneten Koppelelement auf. Der Ausstellhebel ist in Schließstellung des Deckels mittels des Koppelelements im Eingriff mit einer bezüglich der Führungsschiene ortsfesten Kulisse. Des Weiteren weisen die Ausstellmittel einen in Fahrzeuglängsrichtung in der Führungsschiene verschiebbar angeordneten Kulissenschlitten auf, mit welchem der Ausstellhebel schwenkbar und in einer Richtung zwischen dem Deckel und der Führungsschiene verschiebbar gekoppelt ist. Insbesondere ist der Ausstellhebel im Wesentlichen vertikal zwischen dem Deckel und der Führungsschiene verschiebbar mit dem Kulissenschlitten gekoppelt. Zudem weisen die Ausstellmittel eine Steuerstange auf, welche mit dem Schlitten gekoppelt und in Fahrzeuglängsrichtung verschiebbar bezüglich der Führungsschiene geführt ist. Beispielsweise ist die Steuerstange schwenkbar an dem Schlitten gekoppelt. Die Steuerstange weist eine Steuerkulisse auf, mit welcher der Ausstellhebel derart gekoppelt ist, dass in einem ersten Bewegungsabschnitt ausgehend von der Schließstellung des Deckels bei einem Verschieben des Schlittens in Fahrzeuglängsrichtung nach hinten die Steuerkulisse eine Drehung des Ausstellhebels um das Koppelelement steuert.

Beispielsweise ist der Deckel nach hinten über das Fahrzeugdach in eine Offenstellung verschiebbar, nachdem der Deckel im Bereich seiner Hinterkante ausgestellt worden ist. Das Verschieben des Deckels über das Fahrzeugdach bedeutet, dass der Deckel nach einem Anheben oder Ausstellen im Bereich der Hinterkante über eine Außenseite des Fahrzeugdachs geschoben wird. Bevorzugt handelt es sich bei der Anordnung um ein Schiebedach, bei welchem sich die Führungsschienen in Fahrzeuglängsrichtung über die Dachöffnung hinaus nach hinten erstrecken. Das Schiebedach wird auch als außen geführtes Schiebedach bezeichnet. Alternativ kann es sich bei der Anordnung auch um ein Schiebehebedach oder ein Spoilerdach handeln.

Die verwendeten Ortsangaben oder Richtungsangaben wie "hinten" oder "vorne" sind auf die Fahrzeuglängsrichtung bezogen. Die Fahrzeuglängsrichtung kann auch als Horizontalrichtung oder X-Richtung des mathematischen Rechtssystems bezeichnet werden. Das Ausstellen oder Anheben des Deckels erfolgt im Wesentlichen in einer Vertikalrichtung beziehungsweise Z-Richtung des mathematischen Rechtssystems. Unter dem hinteren Bereich des Deckels ist beispielsweise der Bereich zu verstehen, welcher ausgehend von einer Mitte des Deckels einem Fahrzeugheck zugewandt ist.

Der Ausstellhebel ist beispielsweise ein vorderer Ausstellhebel. Der Ausstellhebel ist mit dem vorderen Endbereich drehbar in einem Bereich der Vorderkante des Deckels mit diesem gekoppelt. Mit dem hinteren Endbereich ist der Ausstellhebel schwenkbar und vertikal in der Richtung zwischen dem Deckel und der Führungsschiene verschiebbar mit dem Kulissenschlitten gekoppelt. Das Koppelelement des Ausstellhebels ist zwischen dem vorderen Endbereich und dem hinteren Endbereich angeordnet, so dass sich bei der Drehung des Ausstellhebels der vordere Endbereich und der hintere Endbereich in entgegengesetzte Richtungen bewegen.

In dem ersten Bewegungsabschnitt wird der Deckel mittels des verschiebbaren Schlittens in die Lüfterstellung verfahren, wobei eine Hinterkante des Deckels angehoben wird. Der Schlitten ist dazu mit einem Antrieb gekoppelt. Dabei verbleibt der Ausstellhebel im Wesentlichen bezüglich der Fahrzeuglängsrichtung in seiner Position. Mit anderen Worten wir der Deckel D und somit der Ausstellhebel in dem ersten Bewegungsabschnitt nicht in Fahrzeuglängsrichtung verschoben. Die Steuerkulisse weist einen Verlauf auf, der so vorgegeben ist, dass eine Bewegung des mit der Steuerstange gekoppelten Schlittens in dem ersten Bewegungsabschnitt eine Drehung des Ausstellhebels um das Koppelelement steuert. Dadurch wird bewirkt, dass der hintere Endbereich des Ausstellhebels in Richtung der Führungsschiene bewegt wird, während der vordere Endbereich des Ausstellhebels nach oben von der Führungsschiene wegbewegt wird. Das Drehen des Ausstellhebels wird insbesondere dadurch ermöglicht, dass der Ausstellhebel mit dem hinteren Endbereich vertikal verschiebbar mit dem Kulissenschlitten gekoppelt ist.

Durch die Drehung des Ausstellhebels kann ein Absenken der Vorderkante des Deckels in Richtung der Führungsschiene beim Ausstellen der Hinterkante des Deckels in die sogenannte Lüfterstellung ausgeglichen werden. Insbesondere wird durch die Drehung des Ausstellhebels eine Bewegung der Vorderkante des Deckels gesteuert, insbesondere ein Abstand der Vorderkante zu der Führungsschiene. Je nach Bedarf wird beispielsweise gesteuert, ob die Vorderkante des Deckels in ihrer Position verbleibt oder leicht abgesenkt wird. Würde sich der vordere Endbereich nicht von der Führungsschiene wegbewegen, würde sich der Deckel um den hinteren Endbereich bzw. der Ausstellhebel um das Koppelelement so drehen, dass die Vorderkante des Deckels in Richtung der Führungsschiene nach unten bewegt werden würde. Dem wird jedoch von der Steuerstange und deren Steuerkulisse gegengesteuert, sodass der vertikale Abstand zwischen der Vorderkante des Deckels und der Führungsschiene beim Verfahren in die Lüfterstellung im Wesentlichen konstant bleibt. Somit verbleibt eine die Dachöffnung begrenzende Kante des Fahrzeugdachs in dem ersten Bewegungsabschnitt im Wesentlichen bündig mit der Vorderkante des Deckels. Im Wesentlichen kann auch ein minimales Absenken der Vorderkante um wenige zehntel Millimeter oder ganze Millimeter umfassen. Dadurch wird beispielsweise ein Entfernen der Vorderkante von einer Dichtung an der Dachöffnung vermieden. Des Weiteren können unerwünschte Geräusche vermieden werden. Zudem wird erreicht, dass sich keine Abrisskante bildet, die bei einer Fahrt des Fahrzeugs mit hoher Geschwindigkeit, beispielsweise bis zu 300 km/h, neben einem erhöhten Windwiderstand auch für eine negative Geräuschentwicklung sorgt. Des Weiteren ist es möglich, Bauraum einzusparen, da beim Ausstellen der Hinterkante des Deckels in die Lüfterstellung der Deckel im Bereich der Vorderkante im Wesentlichen keine Bewegung in Z-Richtung nach unten macht.

Gemäß einer Ausführungsform steuert die Steuerkulisse in dem ersten Bewegungsabschnitt eine vertikale Bewegung des hinteren Endbereichs des Ausstellhebels derart, dass ein Abstand zwischen der Vorderkante des Deckels und der Führungsschiene im Wesentlichen gleich bleibt. Dabei ist ein Verlauf der Steuerkulisse derart ausgebildet, dass die Deckelvorderkante nicht in Richtung der Führungsschiene abgesenkt beziehungsweise bewegt wird. Im Wesentlichen hat dabei die oben beschriebene Bedeutung.

Gemäß einer weiteren Ausgestaltung ist die Steuerstange relativ zu der Führungsschiene verschiebbar an dem Kulissenschlitten geführt. Somit ist es möglich, dass die Steuerstange beim Verschieben des Schlittens in Fahrzeuglängsrichtung nach hinten sich relativ zu dem Kulissenschlitten und somit dem Ausstellhebel verschiebt. Des Weiteren ist es dadurch möglich, auf eine zusätzliche, beispielsweise bezüglich der Führungsschiene ortsfeste Kulisse, zu verzichten, welche notwendig wäre, um die Steuerstange in Fahrzeuglängsrichtung zu führen. Dabei ist die Steuerstange beispielsweise nicht in Z-Richtung verschiebbar, insbesondere im Bereich des Kulissenschlittens.

Gemäß einer weiteren Ausgestaltung weist die Anordnung weiter ein Schiebeelement auf, welches an dem Ausstellhebel in seinem hinteren Bereich schwenkbar angeordnet ist. Weiter ist das Schiebeelement vertikal verschiebbar mit dem Kulissenschlitten gekoppelt und weist ein Koppelelement auf, mittels welchem das Schiebeelement in der Steuerkulisse geführt ist. Mittels des zusätzlichen Schiebeelements werden die schwenkbare Kopplung und die vertikale verschiebbare Kopplung zwischen dem Ausstellhebel und dem Kulissenschlitten aufgeteilt. Zum einen ist der Ausstellhebel schwenkbar mit dem Schiebeelement gekoppelt und zum anderen ist das Schiebeelement wiederum vertikal verschiebbar in dem Kulissenschlitten geführt. Zudem ist nicht der Ausstellhebel selbst, sondern indirekt über das Schiebeelement mit der Steuerkulisse der Steuerstange im Eingriff. Somit wird beim Verschieben des Schlittens und somit der Steuerstange das Schiebeelement vertikal verschoben, welches dessen vertikale Bewegung auf den Ausstellhebel überträgt. Dadurch kann unter anderem ein herkömmlicher Ausstellhebel durch Verwendung eines Schiebeelements in der beschriebenen Anordnung ohne Umgestaltungen verwendet werden. Das Koppelelement des Schiebelements kann somit derart ausgestaltet sein, dass es über eine große Fläche in der Steuerkulisse geführt ist und somit eine gute Kraftübertragung bei einer Flächenpressung gewährleistet. Dadurch ist der Ausstellhebel nicht drehbar in der Steuerkulisse mittels eines zylindrischen Koppelelements geführt. Bei einer solchen drehbaren Führung würde eine Linienpressung durch das Koppelelement vorliegen, welche im Vergleich zu einer Flächenpressung einen deutlich höheren Verschleiß verursacht.

Unter dem Schiebeelement ist ein mechanisches Bauelement zu verstehen, welches schwenkbar an dem Ausstellhebel angeordnet ist.

Gemäß einer weiteren Ausgestaltung verändert sich ein Abstand zwischen der Steuerkulisse und der Führungsschiene entlang der Fahrzeuglängsrichtung. Bevorzugt ändert sich der Verlauf der Steuerkulisse derart, dass sich ein Abstand zwischen der Steuerkulisse und der Führungsschiene bezüglich der Fahrzeuglängsrichtung nach hinten vergrößert. Durch eine derartig ausgestaltete Steuerkulisse lässt sich das Drehen des Ausstellhebels steuern.

Gemäß einer weiteren Ausgestaltung ist der Schlitten über die Steuerstange derart verschiebbar mit dem Kulissenschlitten gekoppelt, dass sich in dem ersten Bewegungsabschnitt ein Abstand zwischen dem Schlitten mit dem Ausstellhebel vergrößert. Mit anderen Worten, beim Verschieben des Schlittens mittels des Antriebs wird zunächst die Hinterkante des Deckels zum Verfahren in die Lüfterstellung verschoben, wobei der Ausstellhebel im Wesentlichen in seiner Position verharrt. Beim Verschieben des Schlittens ändert sich demzufolge in dem ersten Bewegungsabschnitt der Abstand zwischen dem Schlitten und dem Kulissenschlitten beziehungsweise dem Ausstellhebel.

Gemäß einer weiteren Ausgestaltung weist die Anordnung einen weiteren Ausstellhebel auf, welcher schwenkbar mit dem Schlitten und im Bereich der Hinterkante mit dem Deckel gekoppelt ist, sodass in dem ersten Bewegungsabschnitt beim Verschieben des Schlittens ein Ausstellen des Deckels gesteuert wird, wobei sich ein Abstand zwischen der Hinterkante des Deckels und der Führungsschiene vergrößert. Mittels des weiteren Ausstellhebels lässt sich der Deckel in die Lüfterstellung in dem ersten Bewegungsabschnitt verfahren.

Weitere Ausgestaltungen sind in den Unteransprüchen sowie in der nachfolgenden, ausführlichen Beschreibung eines Ausführungsbeispiels unter Zuhilfenahme der angehängten Figuren beschrieben.

Elemente oder Merkmale gleicher Konstruktion oder Funktion sind figurenübergreifend mit den gleichen Bezugszeichen versehen. Bereits mit Hilfe von Bezugszeichen beschriebene Elemente oder Merkmale sind nicht zwingend in allen Figuren mit Bezugszeichen versehen.

In den Figuren zeigen:
- Figur 1: eine schematische perspektivische Ansicht eines Fahrzeugs,
- Figur 2: eine schematische Darstellung eines kinematischen Prinzips einer Anordnung für das Fahrzeugdach,
- Figur 3: eine schematische Darstellung des kinematischen Prinzips der Anordnung in der Lüfterstellung,
- Figur 4: eine perspektivische Explosionsdarstellung der Anordnung,
- Figur 5: eine perspektivische Ansicht der Anordnung gemäß Figur 3 in einem zusammengebauten Zustand und
- Figuren 6 bis 8: drei schematische, zweidimensionale Ansichten der Anordnung in verschiedenen Stellungen der Anordnung.

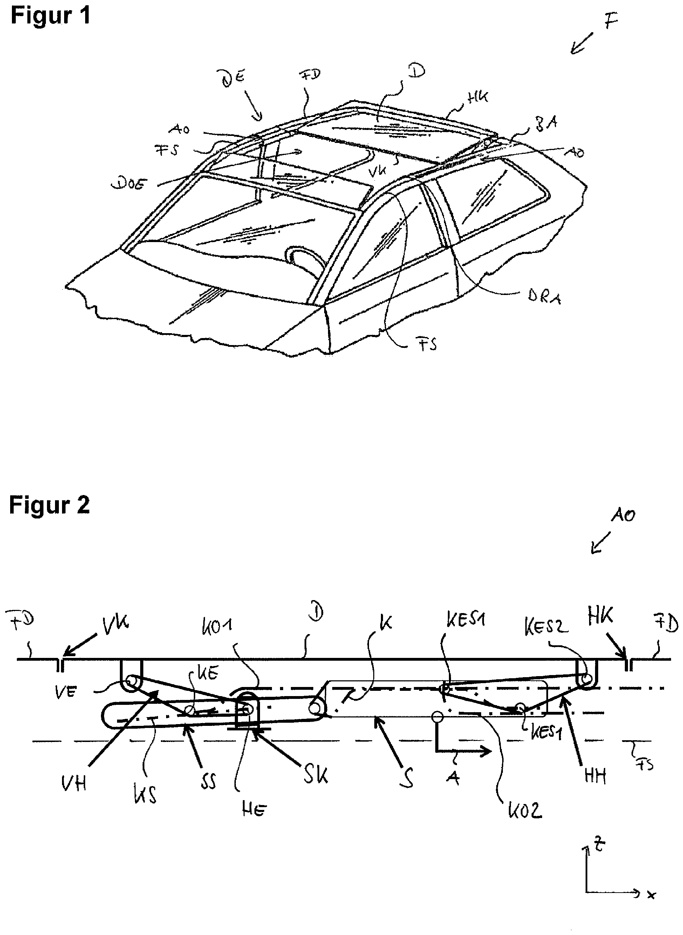

Die Figur 1 zeigt eine schematische, perspektivische Ansicht eines Fahrzeugs F mit einem Fahrzeugdach FD. Das Fahrzeugdach FD weist einen fahrzeugfesten Befestigungsabschnitt BA auf, der als Dachschale ausgebildet ist. Der fahrzeugfeste Befestigungsabschnitt BA ist mit einer Dachöffnung DOE versehen, die mittels eines verstellbaren beweglichen Dachelements DE wahlweise verschlossen oder zumindest teilweise freigebbar ist.

Die Dachöffnung DOE wird von einem an dem Fahrzeugdach FD ausgebildeten Dachrahmenabschnitt DRA begrenzt. Der Dachrahmenabschnitt DRA hat vorzugsweise beidseitig angeordnete Anordnungen AO mit Führungsschienen FS.

Das Dachelement DE hat einen Deckel D und ist relativ verschiebbar bezüglich der Führungsschiene FS im Bereich des Befestigungsabschnitts BA gelagert. Dabei ist das Dachelement DE in den Führungsschienen FS verschiebbar gelagert. Der Deckel D ist vorzugsweise als Glasdeckel ausgebildet.

Der Deckel D ist aus einer Schließstellung zum Verschließen der Dachöffnung DOE in eine Offenstellung zu verschieben, um so die Dachöffnung DOE des Fahrzeugdachs FD freizugeben. Hierzu weisen die Anordnungen AO Ausstellmittel auf. Zum Öffnen wird der Deckel D im Bereich einer Hinterkante HK angehoben und über einen hinteren Teil des Fahrzeugdachs FD geschoben. Dazu ist es erforderlich, dass der Deckel D angehoben wird, da er in Schließstellung bündig mit der Oberseite des Fahrzeugdachs FD abschließt. In einem ersten Bewegungsabschnitt eines typischen Bewegungsablaufs wird zunächst die Hinterkante HK des Deckels D ausgestellt. Diese Zwischenposition wird auch als Lüfterstellung bezeichnet. Im weiteren Verlauf der Öffnungsbewegung wird der Deckel D in Fahrzeuglängsrichtung nach hinten in die Offenstellung verschoben. Dabei wird zudem auch der Deckel D im Bereich einer der Hinterkante HK gegenüberliegenden Vorderkante VK angehoben.

Dieser typische Bewegungsablauf wird mit Hilfe der Anordnungen AO bewerkstelligt, welche anhand der folgenden Figuren 2 bis 8 detailliert beschrieben werden. Dabei ist in den Figuren 2 bis 8 jeweils nur eine Anordnung AO auf einer Seite mit der zugehörigen Mechanik dargestellt. Alle Teile sind jedoch spiegelbildlich zu einer Mittellängsebene des Fahrzeugs auf beiden Seiten der Dachöffnung DOE angeordnet. Die Anordnung AO kann auch als Ausstellvorrichtung bezeichnet werden.

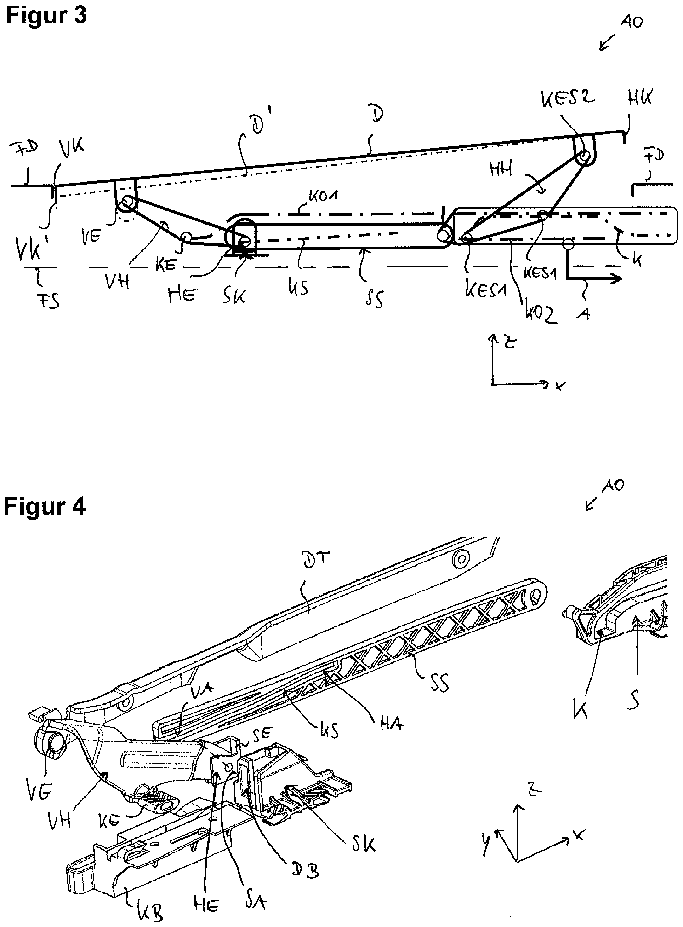

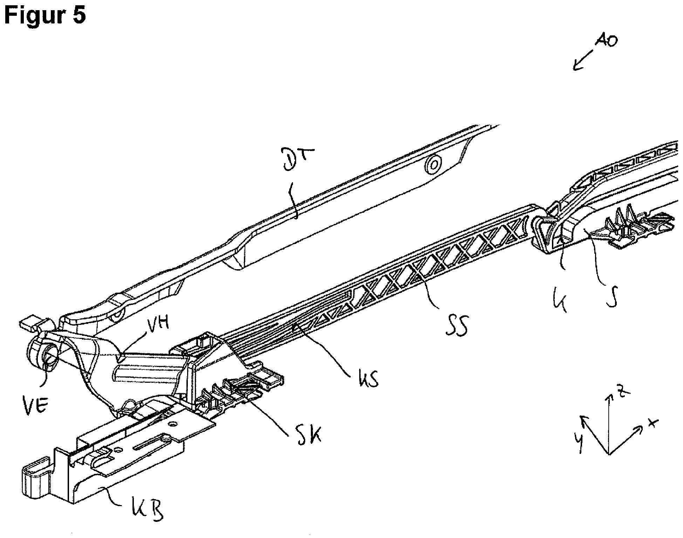

Es gilt zu beachten, dass in den Figuren 4 und 5 ein Deckelträger DT dargestellt ist, welcher mit dem Deckel D mechanisch fest gekoppelt ist. Somit ist der Deckel D mit den Ausstellmitteln der Anordnungen AO direkt gekoppelt und mit Hilfe dieser bewegbar. Ein Verschieben des Deckels D ist gleichbedeutend mit einem Verschieben des Deckelträgers DT.

Weiter ist in den Figuren 2 bis 8 jeweils ein Koordinatensystem dargestellt, welches die Richtungen X und Z beziehungsweise X, Y und Z zeigt. Das Koordinatensystem entspricht dem mathematischen Rechtssystem. Die X-Richtung kann dabei auch als Fahrzeuglängsrichtung oder Horizontalrichtung bezeichnet werden, die Z-Richtung kann auch als Vertikalrichtung bezeichnet werden.

Die Figuren 2 und 3 zeigen ein kinematisches Prinzip der Anordnung AO in zwei Zuständen. Figur 2 zeigt dabei die Anordnung AO in Schließstellung des Deckels, während Figur 3 die Anordnung AO in der Lüfterstellung zeigt. Mit Hilfe der Figuren 2 und 3 wird die grundlegende Mechanik und Kinematik schematisch beschrieben. Weitere Details werden unter Zuhilfenahme der weiteren Figuren 4 bis 8 erläutert.

Die Ausstellmittel der Anordnung AO umfassen einen vorderen Ausstellhebel VH, eine Steuerstange SS, einen Kulissenschlitten SK, einen Schlitten S sowie einen hinteren Ausstellhebel HH. Weiterhin umfasst die Anordnung AO zwei bezüglich der Führungsschiene FS ortsfeste Kulissen, nämlich eine erste ortsfeste Kulisse KO1 und eine zweite ortsfeste Kulisse KO2. Der Schlitten S weist eine Schlittenkulisse K auf. Die Steuerstange SS weist eine Steuerkulisse KS auf.

Der Schlitten S ist mittels eines Antriebs A in Fahrzeuglängsrichtung nach hinten verschiebbar, wobei dieser in der Führungsschiene FS geführt ist. Der Schlitten S kann auch als Antriebsschlitten bezeichnet werden. Beispielsweise ist der Schlitten S über ein Antriebsseil mit einem Elektromotor gekoppelt.

Der hintere Ausstellhebel HH ist mittels zweier Koppelelemente KES1 in der Schlittenkulisse K geführt. Dabei befinden sich die beiden Koppelelemente KES1 des hinteren Ausstellhebels HH in unterschiedlichen Ebenen der Schlittenkulisse K bezüglich des Deckels D. Mit einem weiteren Koppelelement KES2 ist der hintere Ausstellhebel HH schwenkbar mit dem Deckel D gekoppelt.

Der vordere Ausstellhebel VH ist mit einem Koppelelement KE mit der ortsfesten Kulisse KO1 gekoppelt. Weiter ist der vordere Ausstellhebel VH in einem vorderen Endbereich VE mit dem Deckel D im Bereich der Vorderkante VK schwenkbar gekoppelt. Zudem ist der vordere Ausstellhebel VH in einem hinteren Endbereich HE mit dem Kulissenschlitten SK schwenkbar und vertikal in Z-Richtung verschiebbar gekoppelt.

Die Steuerstange SS ist mit dem Schlitten S schwenkbar gekoppelt und relativ bezüglich der Führungsschiene FS verschiebbar an dem Kulissenschlitten KS geführt. In anderen Worten ist eine Bewegung der Steuerstange SS in Z-Richtung im Wesentlichen verriegelt. Der vordere Ausstellhebel VH ist in dem hinteren Endbereich HE mit der Steuerkulisse KS der Steuerstange SS gekoppelt.

In dem ersten Bewegungsabschnitt wird der Schlitten S mittels des Antriebs A ausgehend von der in Figur 2 gezeigten Schließstellung des Deckels D in Fahrzeuglängsrichtung nach hinten verschoben. Dabei bewegt sich der Schlitten S zunächst relativ bezüglich des Deckels D, wobei die Hinterkante HK des Deckels D in Z-Richtung von der Führungsschiene FS weg nach oben ausgestellt wird. Dieser Zustand ist in Figur 3 gezeigt und wird als Lüfterstellung des Deckels D bezeichnet. Beim Verschieben des Schlittens S wird die Steuerstange SS ebenfalls relativ zur Führungsschiene FS aufgrund ihrer Kopplung mit dem Schlitten S bewegt. Da der Deckel D zunächst nicht in X-Richtung verschoben wird, verbleibt der vordere Ausstellhebel VH im Wesentlichen in seiner Position bezüglich der Fahrzeuglängsrichtung.

In dem ersten Bewegungsabschnitt steuert die Steuerkulisse KS der Steuerstange SS durch ihre Verschiebung relativ zur Führungsschiene FS eine vertikale Bewegung des hinteren Endbereichs HE. Dadurch bewegt sich der hintere Endbereich HE in Z-Richtung auf die Führungsschiene FS (gestrichelt dargestellt) zu. Da der vordere Ausstellhebel VH mit dem Koppelelement KE, welches beispielsweise ein Gleitelement oder ein Drehgleiter ist, in der ortsfesten Kulisse KO1 geführt ist, wird durch die Vertikalbewegung des hinteren Endbereichs HE des vorderen Ausstellhebels VH dieser um das Koppelelement KE gedreht. Dabei bewegt sich der vordere Endbereich VE in Z-Richtung nach oben von der Führungsschiene FS weg. Dies liegt daran, dass das Koppelelement KE des vorderen Ausstellhebels VH zwischen dem hinteren Endbereich HE und dem vorderen Endbereich VE angeordnet ist. Mit anderen Worten liegen die beiden Endbereiche HE und VE auf unterschiedlichen Seiten bezüglich einer Ebene, welche normal zu der X-Richtung durch das Koppelelement KE verläuft.

Durch die Drehung wird erreicht, dass die Vorderkante VK des Deckels D im Wesentlichen keine Bewegung in Z-Richtung vollzieht (siehe Figur 3). Somit verbleibt die Vorderkante VK im Wesentlichen bündig mit dem Fahrzeugdach FD bzw. mit dem die Dachöffnung DOE begrenzenden Dachrahmenabschnitt DRA. Somit können die eingangs erwähnten Nachteile wie beispielsweise die negative Geräuschentwicklung vermieden werden. Weiter wird dadurch beispielsweise ein Windwiderstand des Fahrzeugs bei hohen Geschwindigkeiten reduziert.

Würde man eine derartige Drehbewegung des vorderen Ausstellhebels VH nicht vorsehen, so würde die Vorderkante VK des Deckels bei der Ausstellung der Hinterkante des Deckels in Z-Richtung nach unten in Richtung der Führungsschiene FS bewegt werden. Dieser Zustand ist in Figur 3 mittels einer Strich-Punkt-Darstellung eines Deckels D' mit einer Vorderkante VK' gezeigt.

Es sei an dieser Stelle darauf hingewiesen, dass das Ausstellen der Hinterkante HK des Deckels D nicht näher beschrieben wird. Vielmehr richtet sich der Fokus der Beschreibung auf das Ausgleichen der Vertikalbewegung der Vorderkante VK des Deckels D.

Die Figuren 4 und 5 zeigen eine mögliche konstruktive Ausgestaltung der Anordnung AO. Dabei zeigt die Figur 4 die Anordnung AO in einer Explosionsdarstellung, während Figur 5 die Anordnung AO in einem zusammengebauten, montierten Zustand zeigt. Insbesondere lässt sich ein Teil des Schlittens S erkennen, in welchem die Schlittenkulisse K ausgebildet ist. Weiter ist die Steuerstange SS mit der Steuerkulisse KS gezeigt. Weiter ist ein Kulissenbauteil KB gezeigt, in welchem die ortsfeste Kulisse KO1 ausgebildet ist (nicht sichtbar). Weiter ist das Koppelelement KE des vorderen Ausstellhebels VH gezeigt, mit welchem dieser zumindest in Schließstellung des Deckels D in der ortsfesten Kulisse KO1 geführt ist.

Wie bereits beschrieben ist der vordere Ausstellhebel VH schwenkbar und vertikal verschiebbar mit dem Kulissenschlitten SK gekoppelt. Dabei ist der vordere Ausstellhebel VH nicht direkt mit dem Kulissenschlitten SK gekoppelt, sondern indirekt über ein Schiebeelement SE. Dieses ist schwenkbar bezüglich einer Schwenkachse SA an dem hinteren Endbereich HE des vorderen Ausstellhebels VH festgelegt. Wie in Figur 5 zu erkennen ist, ist der vordere Ausstellhebel VH mit dem Schiebeelement SE mit dem Kulissenschlitten SK gekoppelt. Dabei ist das Schiebeelement SE verschiebbar in dem Kulissenschlitten SK in Vertikalrichtung gelagert. Dies bedeutet, dass der hintere Endbereich HE des vorderen Ausstellhebels VH über das Schiebeelement SE von der Führungsschiene FS weg oder zu dieser hin bewegbar ist. Somit ist der vordere Ausstellhebel VH sowohl schwenkbar als auch vertikal verschiebbar mit dem Kulissenschlitten KS gekoppelt.

Wie bereits erwähnt, ist die Steuerstange SS ist mit dem Schlitten S schwenkbar gekoppelt. Alternativ kann auch eine starre Kopplung vorgesehen sein. Des Weiteren weist der Kulissenschlitten SK einen oder mehrere Durchbrüche DB auf, durch welche die Steuerstange SS geführt ist. Somit ist die Steuerstange SS relativ bezüglich des Kulissenschlittens SK und somit des vorderen Ausstellhebels VH verschiebbar.

Es ist möglich, dass die Steuerstange SS bezüglich eines oder mehrerer Durchbrüche DB eine leichte Drehbewegung vollziehen kann, insbesondere während des eingangs beschriebenen Bewegungsablaufs. Dies kann notwendig sein, um eine leicht gekrümmte Form der Führungsschiene FS auszugleichen (nicht dargestellt). Alternativ könnte die Steuerstange SS auch in einer bezüglich der Führungsschiene FS weiteren ortsfesten Kulisse geführt sein.

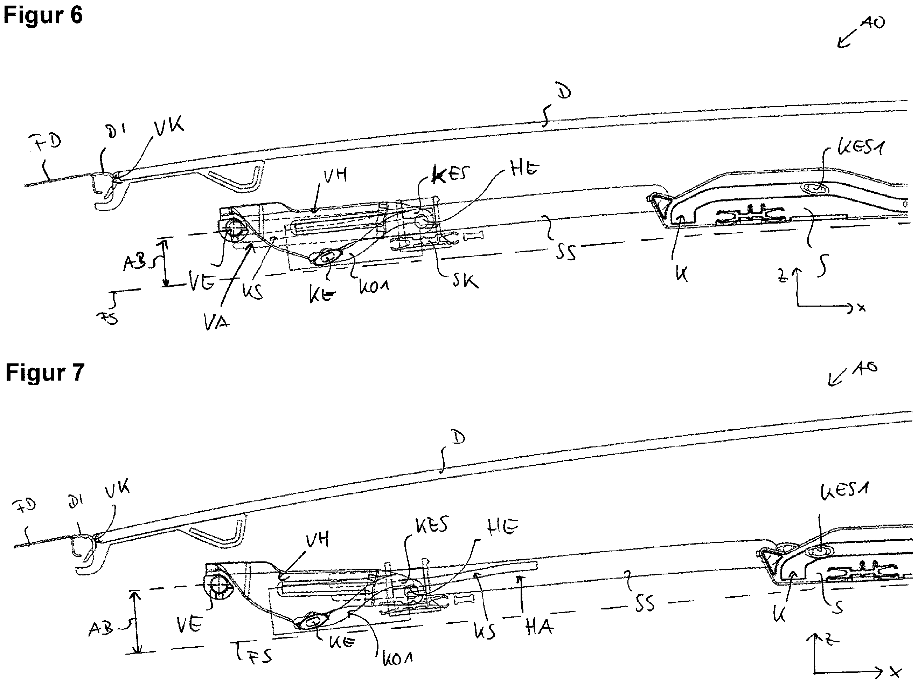

Das Schiebeelement SE weist an einer der Steuerstange SS zugewandten Seite ein Koppelelement KES auf (siehe Figuren 6 bis 8). Über das Koppelelement KES ist im montierten Zustand das Schiebeelement SE im Eingriff mit der Steuerkulisse KS der Steuerstange SS. Somit ist der vordere Ausstellhebel VH über das Schiebeelement SE mit der Steuerstange SS gekoppelt.

In einer alternativen, nicht gezeigten Ausführungsform ist auf das Schiebeelement SE verzichtet. Dabei ist der vordere Ausstellhebel VH in seinem hinteren Endbereich HE schwenkbar direkt mit dem Kulissenschlitten KS gekoppelt. Beispielsweise weist der Kulissenschlitten KS hierzu ein Langloch auf, in welchem ein Koppelelement des vorderen Ausstellhebels VH drehbar sowie vertikal verschiebbar geführt ist. Zusätzlich weist der vordere Ausstellhebel VH in dem hinteren Endbereich HE ein weiteres Koppelelement auf, mittels welchem er im Eingriff mit der Steuerkulisse KS der Steuerstange SS ist. Dabei muss sichergestellt werden, dass der vordere Ausstellhebel VH mit dem weiteren Koppelelement drehbar in der Steuerkulisse KS geführt ist. In einer derartigen Ausgestaltung könnte auf das Schiebeelement SE verzichtet werden, was Kosten an Material und hinsichtlich einer Montage einspart.

Der Verlauf der Steuerkulisse KS ist derart ausgestaltet, dass sich ein Abstand zwischen der Führungsschiene FS und der Steuerkulisse KS in Fahrzeuglängsrichtung nach hinten vergrößert. In einem hinteren Abschnitt HA ist der Abstand größer als in einem vorderen Abschnitt VA. Wie bereits erwähnt, wird mittels der Steuerkulisse KS die Drehbewegung des vorderen Ausstellhebels um das Koppelelement KE gesteuert. In Abhängigkeit dieser Drehbewegung ist die Steuerkulisse SK beziehungsweise deren Verlauf ausgebildet.

Je nachdem, wie schnell bei Bewegung des Schlittens S die Drehbewegung vollzogen werden soll, kann sich der Abstand zwischen der Steuerkulisse KS und der Führungsschiene FS mehr oder weniger stark verändern. Hinsichtlich eines zeitlichen Verlaufs der Drehbewegung bei Verschieben des Schlittens S kann sich der Abstand der Steuerkulisse SK und der Führungsschiene FS mit einer größeren oder weniger großen Steigung ändern. Alternativ oder zusätzlich kann sich der Verlauf geschwungen, stufenartig linear oder dergleichen ändern.

In den folgenden Figuren 6 bis 8 ist der mit Hilfe der Figuren 2 und 3 beschriebene Bewegungsablauf nochmals kurz beschrieben. Aus Gründen der Übersichtlichkeit wurde dabei auf die Darstellung des Deckelträgers DT zur Kopplung des vorderen Ausstellhebels VH mit dem Deckel D verzichtet.

Figur 6 zeigt dabei die Anordnung in Schließstellung des Deckels. Der vordere Ausstellhebel VH ist dabei mit der Steuerstange SS in dem hinteren Abschnitt HA der Steuerkulisse KS mit dieser gekoppelt. Mit anderen Worten, befindet sich das Koppelelement KES des Schiebeelements SE in dem hinteren Abschnitt HA der Steuerkulisse KS. In Schließstellung des Deckels D schließt die Vorderkante VK des Deckels im Wesentlichen bündig mit dem Fahrzeugdach FD ab. Zusätzlich ist in Figur 6 auch eine Dichtung DI gezeigt, welche zwischen der Vorderkante des Deckels VK und dem Fahrzeugdach FD angeordnet ist.

Wird nun der Schlitten S in Fahrzeuglängsrichtung nach hinten ausgehend von der in Figur 6 gezeigten Stellung verschoben, so wird der Deckel D an seiner Hinterkante HK in Z-Richtung ausgestellt. Dabei bewegt sich die Steuerstange SS relativ bezüglich des Kulissenschlittens SK. In diesem ersten Bewegungsabschnitt wird der Deckel D noch nicht in Fahrzeug Fahrzeuglängsrichtung nach hinten verschoben. Dadurch dass der Kulissenschlitten SK in der Führungsschiene FS geführt ist und die Steuerstange SS im Wesentlichen keine Bewegung in Z-Richtung aufgrund der Kopplung mit dem Kulissenschlitten KS vollzieht, steuert die Steuerkulisse KS eine Bewegung des Koppelelements KES des Schiebeelements SE in Z-Richtung nach unten in Richtung der Führungsschiene FS. Dabei wird das Koppelelement KES des Schiebeelements SE in Richtung des vorderen Abschnitts VA der Steuerkulisse KS geführt.

Durch die Bewegung des Koppelelements KES des Schiebeelements SE in Z-Richtung wird der hintere Endbereich HE des vorderen Ausstellhebels nach unten in Z-Richtung in Richtung der Führungsschiene FS bewegt, wobei sich der vordere Ausstellhebel VH um das Koppelelement KE verschwenkt. Durch die Drehung verbleibt die Vorderkante VK des Deckels D im Wesentlichen in seiner Position bezüglich der Z-Richtung. Dabei vergrößert sich ein Abstand AB des vorderen Endbereichs VE zu der Führungsschiene FS. Diese Vergrößerung des Abstands AB entspricht dem Ausgleich der Bewegung der Vorderkante VK des Deckels D, so dass diese im Wesentlich in ihrer Position verharrt. Dieser Zustand ist in Figur 7 dargestellt. Im Vergleich zu dem in Figur 6 gezeigten Zustand hat sich ein Abstand zwischen dem Schlitten S und dem Kulissenschlitten SK beziehungsweise dem vorderen Ausstellhebel VH in dem ersten Bewegungsabschnitt vergrößert.

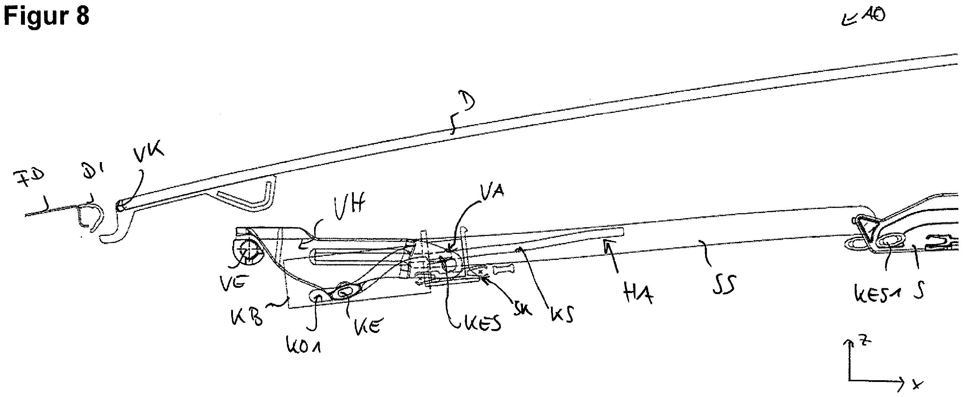

Wird der Schlitten S weiter nach hinten verschoben, so wird nach dem vollständigen Ausstellen der Hinterkante HK des Deckels D dieser über das Fahrzeugdach FD hinweggeschoben. Dieser Zustand ist in Figur 8 gezeigt, wobei sich die Vorderkante VK von dem Dichtelement DI und dem Fahrzeugdach FD leicht entfernt hat. Weiter ist der vordere Ausstellhebel VH mittels des Koppelelements KE in der ortsfesten Kulisse KO1 in X-Richtung verschoben worden. Weiterhin hat sich die Vorderkante VK des Deckels D in Z-Richtung im Wesentlichen nicht verändert.

Sämtliche dargestellte Teile und Elemente könnten in ihrer expliziten Formgebung abgeändert und/oder variiert sein, wobei das grundlegende, hier erläuterte mechanische und kinematische Wirkprinzip der Anordnung erhalten bleiben soll.

### Bezugszeichenliste

- A: Antrieb
- AB: Abstand
- AO: Anordnung
- BA: Befestigungsabschnitt
- D, D': Deckel
- DB: Durchbruch
- DE: Deckelelement
- DI: Dichtung
- DOE: Dachöffnung
- DRA: Dachrahmenabschnitt
- DT: Deckelträger
- F: Fahrzeug
- FD: Fahrzeugdach
- FS: Führungsschiene
- HA, VA: Abschnitt
- HE: hinterer Endbereich
- HH: hinterer Ausstellhebel
- HK: Hinterkante
- K: Schlittenkulisse
- KB: Kulissenbauteil
- KE, KES, KES1, KES2: Koppelelement
- KS: Steuerkulisse
- KO1, KO2: ortsfeste Kulisse
- S: Schlitten
- SA: Schwenkachse
- SE: Schiebeelement
- SK: Kulissenschlitten
- SS: Steuerstange
- VE: vorderer Endbereich
- VH: vorderer Ausstellhebel
- VK, VK': Vorderkante

## Patentansprüche

1. Anordnung (AO) mit einem Deckel (D) für ein Fahrzeugdach (FD), der eine Vorderkante (VK) und eine der Vorderkante (VK) gegenüberliegenden Hinterkante (HK) aufweist und ausgehend von einer Schließstellung zum Verschließen einer Dachöffnung (DOE) zum Öffnen durch Ausstellmittel in seinem hinteren Bereich anhebbar ist, die Ausstellmittel aufweisend
- einen in Fahrzeuglängsrichtung in einer Führungsschiene (FS) verschiebbaren Schlitten (S);
- einen Ausstellhebel (VH) mit einem vorderen Endbereich (VE), einem hinteren Endbereich (HE) und einem zwischen dem vorderen Endbereich (VE) und hinterem Endbereich (HE) angeordneten Koppelelement (KE), wobei der Ausstellhebel (VH) in Schließstellung des Deckels (D) mittels des Koppelelements (KE) im Eingriff mit einer bezüglich der Führungsschiene (FS) ortsfesten Kulisse (KO) ist;
**gekennzeichnet durch**
- einen in Fahrzeuglängsrichtung in der Führungsschiene (FS) verschiebbar angeordneten Kulissenschlitten (SK), mit welchem der Ausstellhebel (VH) schwenkbar und in einer Richtung zwischen dem Deckel (D) und der Führungsschiene (FS) verschiebbar gekoppelt ist; und
- eine Steuerstange (SS), welche mit dem Schlitten (S) gekoppelt und in Fahrzeuglängsrichtung verschiebbar bezüglich der Führungsschiene (FS) geführt ist; wobei die Steuerstange (SS) eine Steuerkulisse (KS) aufweist, mit welcher der Ausstellhebel (VH) derart gekoppelt ist, dass in einem ersten Bewegungsabschnitt ausgehend von der Schließstellung des Deckels (D) bei einem Verschieben des Schlittens (S) in Fahrzeuglängsrichtung nach hinten die Steuerkulisse (KS) eine Drehung des Ausstellhebels (VH) um das Koppelelement (KE) steuert.

2. Anordnung (AO) nach Anspruch 1, wobei in dem ersten Bewegungsabschnitt die Steuerkulisse (KS) eine vertikale Bewegung des hinteren Endbereichs (HE) des Ausstellhebels (VH) steuert, so dass ein Abstand zwischen dem hinteren Endbereich (HE) und der Führungsschiene (FS) verringert wird.

3. Anordnung (AO) nach Anspruch 1 oder 2, wobei in dem ersten Bewegungsabschnitt die Steuerkulisse (KS) eine vertikale Bewegung des hinteren Endbereichs (HE) des Ausstellhebels (VH) steuert, so dass ein Abstand zwischen dem vorderen Endbereich (VE) und der Führungsschiene (FS) vergrößert wird.

4. Anordnung (AO) nach einem der Ansprüche 1 bis 3, wobei in dem ersten Bewegungsabschnitt die Steuerkulisse (KS) eine vertikale Bewegung des hinteren Endbereichs (HE) des Ausstellhebels (VH) derart steuert, dass ein Abstand zwischen der Vorderkante (VK) des Deckels (D) und der Führungsschiene (FS) im Wesentlichen gleich bleibt.

5. Anordnung (AO) nach einem der vorhergehenden Ansprüche, wobei die Steuerstange (SS) relativ zu der Führungsschiene (FS) verschiebbar an dem Kulissenschlitten (SK) geführt ist.

6. Anordnung (AO) nach einem der vorhergehenden Ansprüche, weiter aufweisend ein Schiebeelement (SE), welches an dem Ausstellhebel (VH) in seinem hinteren Endbereich (HE) schwenkbar angeordnet ist, wobei das Schiebeelement (SE) vertikal verschiebbar mit dem Kulissenschlitten (SK) gekoppelt ist und wobei das Schiebeelement (SE) ein Koppelelement (KES) aufweist, mittels welchem das Schiebeelement (SE) in der Steuerkulisse (KS) geführt ist.

7. Anordnung (AO) nach einem der vorhergehenden Ansprüche, wobei sich ein Abstand zwischen der Steuerkulisse (KS) und der Führungsschiene (FS) entlang der Fahrzeuglängsrichtung verändert.

8. Anordnung (AO) nach Anspruch 7, wobei sich der Verlauf der Steuerkulisse (KS) derart verändert, dass sich ein Abstand zwischen der Steuerkulisse (KS) und der Führungsschiene (FS) bezüglich der Fahrzeuglängsrichtung nach hinten vergrößert.

9. Anordnung (AO) nach einem der vorhergehenden Ansprüche, wobei der Schlitten (S) über die Steuerstange (SS) derart verschiebbar mit dem Kulissenschlitten (SK) gekoppelt ist, dass sich in dem ersten Bewegungsabschnitt ein Abstand zwischen dem Schlitten (S) und dem Ausstellhebel (VH) vergrößert.

10. Anordnung (AO) nach einem der vorhergehenden Ansprüche, weiter aufweisend einen weiteren Ausstellhebel (HH), welcher schwenkbar im Bereich der Hinterkante (HK) mit dem Deckel (D) und mit dem Schlitten (S) gekoppelt ist, so dass in dem ersten Bewegungsabschnitt bei Verschieben des Schlittens (S) ein Ausstellen des Deckels (D) gesteuert wird, wobei sich ein Abstand zwischen der Hinterkante (HK) des Deckels (D) und der Führungsschiene (FS) vergrößert.

## Claims

1. Arrangement (AO) comprising a cover (D) for a vehicle roof (FD), said cover comprising a front edge (VK) and a rear edge (HK) opposing the front edge (VK) and, starting from a closed position for closing a roof opening (DOE), said cover (D) being able to be raised in the rear region thereof by deployment means in order to open the opening (DOE), the deployment means having
- a sliding carriage (S) which is able to be displaced in a guide rail (FS) along the vehicle longitudinal direction;
- a deployment lever (VH) having a front end region (VE), a rear end region (HE) and a coupling element (KE) arranged between the front end region (VE) and the rear end region (HE), wherein, in the closed position of the cover (D), the deployment lever (VH) is in engagement with a slotted guide (KO) which is fixed relative to the guide rail (FS) by means of the coupling element (KE);
**characterized by**
- a slotted guide carriage (SK) which is arranged so as to be displaceable in the guide rail (FS) along the vehicle longitudinal direction, the deployment lever (VH) being coupled thereby in a manner which is pivotable and displaceable in a direction between the cover (D) and the guide rail (FS); and
- a control rod (SS) which is coupled to the sliding carriage (S) and which is guided so as to be displaceable relative to the guide rail (FS) along the vehicle longitudinal direction; wherein the control rod (SS) comprises a slotted control guide (KS), the deployment lever (VH) being coupled thereto such that in a first movement section, starting from the closed position of the cover (D), with a displacement of the sliding carriage (S) along the vehicle longitudinal direction to the rear, the slotted control guide (KS) controls a rotation of the deployment lever (VH) around the coupling element (KE).

2. Arrangement (AO) according to Claim 1, wherein in the first movement section the slotted control guide (KS) controls a vertical movement of the rear end region (HE) of the deployment lever (VH), such that a spacing between the rear end region (HE) and the guide rail (FS) is reduced.

3. Arrangement (AO) according to Claim 1 or 2, wherein in the first movement section the slotted control guide (KS) controls a vertical movement of the rear end region (HE) of the deployment lever (VH), such that a spacing between the front end region (VE) and the guide rail (FS) is increased.

4. Arrangement (AO) according to one of Claims 1 to 3, wherein in the first movement section the slotted control guide (KS) controls a vertical movement of the rear end region (HE) of the deployment lever (VH), such that a spacing between the front edge (VK) of the cover (D) and the guide rail (FS) remains substantially the same.

5. Arrangement (AO) according to one of the preceding claims, wherein the control rod (SS) is displaceably guided relative to the guide rail (FS) on the slotted guide carriage (SK).

6. Arrangement (AO) according to one of the preceding claims, further comprising a sliding element (SE) which is pivotably arranged on the deployment lever (VH) in its rear end region (HE), wherein the sliding element (SE) is coupled in a vertically displaceable manner to the slotted guide carriage (SK) and wherein the sliding element (SE) comprises a coupling element (KES), the sliding element (SE) being guided thereby in the slotted control guide (KS).

7. Arrangement (AO) according to one of the preceding claims, wherein a spacing between the slotted control guide (KS) and the guide rail (FS) is altered in the vehicle longitudinal direction.

8. Arrangement (AO) according to Claim 7, wherein the path of the slotted control guide (KS) is altered, such that a spacing between the slotted control guide (KS) and the guide rail (FS) relative to the vehicle longitudinal direction is increased to the rear.

9. Arrangement (AO) according to one of the preceding claims, wherein the sliding carriage (S) is displaceably coupled to the slotted guide carriage (SK) via the control rod (SS), such that in the first movement section a spacing between the sliding carriage (S) and the deployment lever (VH) is increased.

10. Arrangement (AO) according to one of the preceding claims, additionally comprising a further deployment lever (HH) which is pivotably coupled in the region of the rear edge (HK) to the cover (D) and to the sliding carriage (S), such that in the first movement section a deployment of the cover (D) is controlled when displacing the sliding carriage (S), wherein a spacing between the rear edge (HK) of the cover (D) and the guide rail (FS) is increased.

## Revendications

1. Agencement (AO) comprenant un couvercle (D) pour un toit de véhicule (FD) qui présente une arête avant (VK) et une arête arrière (HK) opposée à l'arête avant (VK) et qui peut être soulevé à partir d'une position de fermeture pour fermer une ouverture de toit (DOE) en vue de l'ouverture par des moyens de sortie dans sa région arrière, les moyens de sortie présentant
- un chariot (S) pouvant être déplacé dans un rail de guidage (FS) dans la direction longitudinale du véhicule ;
- un levier de sortie (VH) avec une région d'extrémité avant (VE), une région d'extrémité arrière (HE) et un élément d'accouplement (KE) disposé entre la région d'extrémité avant (VE) et la région d'extrémité arrière (HE), le levier de sortie (VH), dans la position de fermeture du couvercle (D) au moyen de l'élément d'accouplement (KE) étant en prise avec une coulisse (KO) fixe par rapport au rail de guidage (FS) ;
**caractérisé par**
- un chariot à coulisse (SK) disposé de manière déplaçable dans le rail de guidage (FS) dans la direction du véhicule, avec lequel le levier de sortie (VH) peut être pivoté et est accouplé de manière déplaçable dans une direction entre le couvercle (D) et le rail de guidage (FS) ; et
- une tige de commande (SS) qui est accouplée au chariot (S) et qui est guidée de manière déplaçable dans la direction longitudinale du véhicule par rapport au rail de guidage (FS) ; la tige de commande (SS) présentant une coulisse de commande (KS), avec laquelle le levier de sortie (VH) est accouplé de telle sorte que dans une première portion de déplacement, à partir de la position de fermeture du couvercle (D), dans le cas d'un déplacement du chariot (S) dans la direction longitudinale du véhicule vers l'arrière, la coulisse de commande (KS) commande une rotation du levier de sortie (VH) autour de l'élément d'accouplement (KE).

2. Agencement (AO) selon la revendication 1, dans lequel, dans la première portion déplacement, la coulisse de commande (KS) commande un déplacement vertical de la région d'extrémité arrière (HE) du levier de sortie (VH) de telle sorte qu'une distance entre la région d'extrémité arrière (HE) et le rail de guidage (FS) soit réduite.

3. Agencement (AO) selon la revendication 1 ou 2, dans lequel, dans la première portion de déplacement, la coulisse de commande (KS) commande un déplacement vertical de la région d'extrémité arrière (HE) du levier de sortie (VH) de telle sorte qu'une distance entre la région d'extrémité avant (VE) et le rail de guidage (FS) soit augmentée.

4. Agencement (AO) selon l'une quelconque des revendications 1 à 3, dans lequel, dans la première portion déplacement, la coulisse de commande (KS) commande un déplacement vertical de la région d'extrémité arrière (HE) du levier de sortie (VH) de telle sorte qu'une distance entre l'arête avant (VK) du couvercle (D) et le rail de guidage (FS) reste essentiellement identique.

5. Agencement (AO) selon l'une quelconque des revendications précédentes, dans lequel la tige de commande (SS) est guidée de manière déplaçable par rapport au rail de guidage (FS) sur le chariot à coulisse (SK).

6. Agencement (AO) selon l'une quelconque des revendications précédentes, présentant en outre un élément coulissant (SE) qui est disposé de manière pivotante sur le levier de sortie (VH) dans sa région d'extrémité arrière (HE), l'élément coulissant (SE) étant accouplé de manière déplaçable verticalement avec le chariot à coulisse (SK), et l'élément coulissant (SE) présentant un élément d'accouplement (KES) au moyen duquel l'élément coulissant (SE) est guidé dans la coulisse de commande (KS).

7. Agencement (AO) selon l'une quelconque des revendications précédentes, dans lequel une distance entre la coulisse de commande (KS) et le rail de guidage (FS) varie le long de la direction longitudinale du véhicule.

8. Agencement (AO) selon la revendication 7, dans lequel l'allure de la coulisse de commande (KS) se modifie de telle sorte qu'une distance entre la coulisse de commande (KS) et le rail de guidage (FS) augmente vers l'arrière par rapport à la direction longitudinale du véhicule.

9. Agencement (AO) selon l'une quelconque des revendications précédentes, dans lequel le chariot (S) est accouplé au chariot à coulisse (SK) de manière déplaçable par le biais de la tige de commande (SS) de telle sorte que dans la première portion de déplacement, une distance entre le chariot (S) et le levier de sortie (VH) augmente.

10. Agencement (AO) selon l'une quelconque des revendications précédentes, présentant en outre un levier de sortie supplémentaire (HH) qui est accouplé de manière pivotante dans la région de l'arête arrière (HK) au couvercle (D) et au chariot (S) de telle sorte que dans la première portion de déplacement, lors du coulissement du chariot (S), une sortie du couvercle (D) soit commandée, une distance entre l'arête arrière (HK) du couvercle (D) et le rail de guidage (FS) augmentant.
